# FASCICULE DE BREVET EUROPEEN

(11) **EP 1 195 980 B1**
(45) Date de publication et mention de la délivrance du brevet: **28.11.2007**
(21) Numéro de dépôt: 01402441.8
(22) Date de dépôt: 24.09.2001
(51) Int. Cl.: H04M 19/08, H04L 12/10

(54) **Terminal apte à être alimenté localement et à être téléalimenté par une liaison le reliant à un réseau local**
Endgerät geeignet für lokale Stromversorgung und für Fernspeisung durch ein lokales Netzwerk
Terminal suitable for being powered locally and remotely through a local network

(30) Priorité: 05.10.2000 FR 0012725
(43) Date de publication de la demande: 10.04.2002
(73) Titulaire: Alcatel Lucent, 75008 Paris (FR)
(72) Inventeur: Vergnaud, Gérard, 95130 Franconville (FR)
(74) Mandataire: Sciaux, Edmond

(56) Documents cités:
- EP-A- 0 981 227
- WO-A-96/23377
- PATENT ABSTRACTS OF JAPAN vol. 1999, no. 14, 22 décembre 1999 (1999-12-22) & JP 11 252148 A (OKI ELECTRIC IND CO LTD), 17 septembre 1999 (1999-09-17)

## Description

La présente invention concerne un terminal apte à être alimenté localement et à être téléalimenté par une liaison le reliant à un réseau local informatique, par exemple de type Ethernet. Classiquement, les terminaux connectés à un réseau local informatique (par exemple : ordinateurs personnels, imprimantes, etc ...) sont alimentés localement, par le secteur. Des cordons d'alimentation à 110 ou 220 Volts, indépendants des liaisons de données sont donc utilisées pour alimenter les terminaux. Cette solution augmente la difficulté de l'installation du réseau local :
- L'utilisation de deux cordons soulève des problèmes d'encombrement pouvant, en outre, limiter la liberté de mouvement des personnes.
- Elle crée des risques électriques.

Dans le cas d'un poste téléphonique, une alimentation locale par le secteur a en plus pour inconvénient de mettre le poste téléphonique hors service en cas de coupure de secteur, notamment en cas d'incendie ou catastrophe naturelle. C'est pourquoi les postes téléphoniques classiques sont téléalimentés par leur commutateur de rattachement, celui-ci comportant des accumulateurs de secours.

On commence à utiliser des terminaux téléphoniques reliés à un réseau local informatique. Il est donc souhaitable que certains terminaux reliés à un réseau local informatique soient téléalimentés, à travers la même liaison que celle utilisée pour émettre/recevoir des données. Une façon de transmettre un courant de téléalimentation consiste à utiliser deux des huit fils de la liaison : quatre autres de ces huit fils sont deux paires de fils utilisées respectivement pour transmettre et recevoir des données. Une autre façon, dite par circuit fantôme, consiste à relier les deux bornes d'un générateur d'alimentation respectivement aux points milieux d'un enroulement de transformateur relié à la paire de réception de données et d'un enroulement d'un autre transformateur relié à la paire d'émission de données, dans le dispositif de téléalimentation. Du côté du terminal, la tension d'alimentation est fournie respectivement par les points milieux d'un enroulement de transformateur relié à la paire de réception de données et d'un enroulement d'un autre transformateur relié à la paire d'émission de données.

Dans les deux cas, téléalimenter un terminal par le réseau local informatique a pour inconvénient que le dispositif de téléalimentation alimente de manière aveugle un terminal. Or la prise RJ45 située à l'extrémité de la liaison peut recevoir un terminal d'un type autre qu'un téléphone (par exemple un ordinateur personnel, une imprimante, etc...). Il y a un risque d'endommager les circuits électriques de ce terminal. En effet, la prise RJ45 d'un terminal est généralement utilisée de la manière suivante :
- Quatre fils des huit fils sont séparés en deux paires pour respectivement transmettre et recevoir des données. Le terminal comporte un transformateur ayant un enroulement relié à la paire de réception, et un transformateur ayant un enroulement relié à la paire d'émission, chacun de ces enroulements ayant un point milieu qui peut être relié à un potentiel de référence via une résistance de faible valeur.
- Quatre autres fils, inutilisés, sont mis à la masse, souvent par l'intermédiaire d'une combinaison de résistances et de capacités, pour éliminer les éventuels courants de diaphonie induits par les signaux de données circulant dans les quatre premiers fils, et pour réduire les émissions électromagnétiques indésirables. Si on applique une tension d'alimentation relativement élevée, par exemple 48 Volts, sur cette combinaison de résistances et de capacités, ou sur les résistances reliées aux points milieux des transformateurs, l'intensité du courant circulant dans ces résistances peut les détruire.

Le document WO 96/23377 A décrit un tel système de téléalimentation.

On étudie actuellement des procédés pour téléalimenter un terminal dans un réseau local informatique en évitant tout risque de dégât si on branche sur ce réseau un terminal qui n'est pas apte à être téléalimenté par le réseau.

Un tel procédé consiste à :
- produire un signal de test, ou plusieurs signaux de test, sur au moins deux conducteurs d'une liaison destinée à relier le réseau local à un terminal distant, ce signal ayant une énergie telle que le terminal ne peut être endommagé en aucun cas ;
- détecter la présence d'un terminal distant téléalimentable, en détectant la présence d'un module d'identification placé dans le terminal distant, en dérivation sur la liaison, à partir du courant créé par le signal ou les signaux de test dans cette liaison ;
- envoyer un courant de téléalimentation dans cette liaison, si et seulement si la présence d'un terminal téléalimentable est détectée.

Un tel procédé évite tout risque pour les terminaux parce que le courant de téléalimentation n'est envoyé qu'après avoir identifié le terminal comme étant téléalimentable. L'intensité et la durée du signal ou des signaux de test sont choisies de manière que l'opération de détection de la présence d'un terminal téléalimentable, **avant** la téléalimentation, ne peut causer aucun dégât dans le cas où le terminal n'est pas un terminal apte à être téléalimenté.

D'autre part, la téléalimentation doit être interrompue sitôt que le terminal est déconnecté de la liaison, car on pourrait en connecter un autre à tout moment. On prévoit donc de détecter continûment la présence d'un terminal **pendant** la téléalimentation, en mesurant l'intensité du courant de téléalimentation. Le dispositif de téléalimentation conclut à une déconnexion s'il détecte que l'intensité du courant consommé est inférieure à une valeur de seuil prédéterminée, pendant un intervalle de temps ayant une durée prédéterminée qui est suffisante pour assurer qu'il y a bien eu déconnexion.

Le document EP 0 981 227 décrit un système de téléalimentation comportant des moyens pour détecter la présence d'un terminal distant téléalimentable, en mesuarnt l'intensité du courant de téléalimentation dans cette liaison.

On prévoit d'utiliser dans un même réseau local informatique : des terminaux alimentés uniquement localement, des terminaux alimentés uniquement par téléalimentation, et des terminaux à alimentation locale en fonctionnement normal mais aptes à être alimentés par téléalimentation en cas d'arrêt de l'alimentation locale, au moins pour maintenir des fonctions de base.

Ce dernier type de terminal est muni d'un module d'identification analogue à celui d'un terminal qui doit être téléalimenté en permanence ; mais il ne consomme a priori aucun courant de téléalimentation puisqu'il est alimenté localement. Pour le dispositif de téléalimentation, l'absence de courant de téléalimentation le ferait ressembler à un terminal déconnecté. Cette absence conduirait le dispositif de téléalimentation à suspendre la téléalimentation sur la liaison. L'alimentation locale ne serait donc pas secourue. Pour remédier à ce problème, une solution envisageable consisterait à placer dans le terminal, en dérivation sur les deux pôles de téléalimentation, une résistance ayant une valeur telle que l'intensité du courant consommé en permanence sur la téléalimentation soit supérieure à la valeur de seuil. Mais cette solution aurait deux inconvénients :
- Une réduction non négligeable de la puissance maximale que la téléalimentation peut fournir à un tel terminal, lorsqu'elle secourt l'alimentation locale : Si la valeur de seuil est de 20 mA et si la tension nominale de téléalimentation est de 48 volts, par exemple, la puissance dissipée inutilement est d'environ 1W par terminal. Si la puissance maximale délivrable par la liaison est de 14 W par exemple, la puissance maximale effectivement disponible pour téléalimenter le terminal n'est que de 13 W, ce qui réduit les possibilités du terminal.
- Une plus grande difficulté de réalisation du module d'identification du terminal téléalimentable, car la résistance supplémentaire est en dérivation avec le module d'identification, notamment pendant les tests d'identification du type du terminal. Elle modifie donc les caractéristiques électriques apparentes de ce module. La réalisation d'un module d'identification fonctionnant de manière satisfaisante est donc plus compliquée.

Un premier but de l'invention est de permettre de mieux utiliser la puissance que peut fournir la téléalimentation lorsqu'elle secourt l'alimentation locale d'un terminal.

L'objet de l'invention est un terminal apte à être alimenté localement et à être téléalimenté par une liaison le reliant à un réseau local, ce terminal comportant une alimentation locale et comportant un module d'identification connecté à au moins deux conducteurs de la liaison, ce module permettant de détecter à distance que ce terminal est apte à être téléalimenté ;
caractérisé en ce qu'il comprend en outre :
- des moyens pour consommer un courant de téléalimentation ayant une intensité prédéterminée ;
- et des moyens de commande comportant des moyens pour activer les moyens pour consommer, lorsque le fonctionnement de l'alimentation locale est normal ; et pour les inhiber dans le cas contraire.

Lorsque l'alimentation locale est incapable de l'alimenter, le terminal ainsi caractérisé dispose de toute la puissance maximale que peut fournir la téléalimentation, parce que les moyens de commande inhibent les moyens pour consommer un courant de téléalimentation prédéterminé, tant qu'ils n'ont pas constaté que l'alimentation locale est en mesure d'alimenter le terminal.

Lorsque l'alimentation locale est de nouveau capable de l'alimenter, le terminal ainsi caractérisé consomme de nouveau un courant de téléalimentation prédéterminé qui est choisi de façon à être suffisant pour que le terminal soit détecté par le dispositif de téléalimentation comme étant encore présent.

Selon un mode de réalisation préférentiel, les moyens de commande comportent en outre des moyens pour inhiber les moyens pour consommer, lorsque la téléalimentation n'est pas appliquée à cette liaison. Ainsi les moyens pour consommer n'affectent pas le fonctionnement du module d'identification pendant le processus de détection du terminal téléalimentable, qui précède l'application de la téléalimentation.

L'invention sera mieux comprise et d'autres caractéristiques apparaîtront à l'aide de la description ci-dessous et des figures l'accompagnant :
- La figure 1 représente le schéma synoptique d'une partie d'un exemple de réseau local comportant au moins un terminal apte à être alimenté localement et à être téléalimenté par sa liaison à ce réseau local, selon l'Art Antérieur.
- La figure 2 représente le schéma synoptique d'une partie d'un exemple de réseau local comportant un premier exemple de réalisation du terminal selon l'invention.
- La figure 3 représente le schéma synoptique d'une partie de ce premier exemple de réalisation du terminal selon l'invention.
- La figure 4 représente le schéma synoptique plus détaillé d'un premier exemple de réalisation d'un module d'identification, selon l'Art Antérieur.
- La figure 5 représente le schéma synoptique d'une partie d'un deuxième exemple de réalisation du terminal selon l'invention.
- La figure 6 représente le schéma synoptique plus détaillé d'un second exemple de réalisation d'un module d'identification, selon l'Art Antérieur.
- La figure 7 représente le schéma synoptique d'une partie d'un troisième exemple de réalisation du terminal selon l'invention.

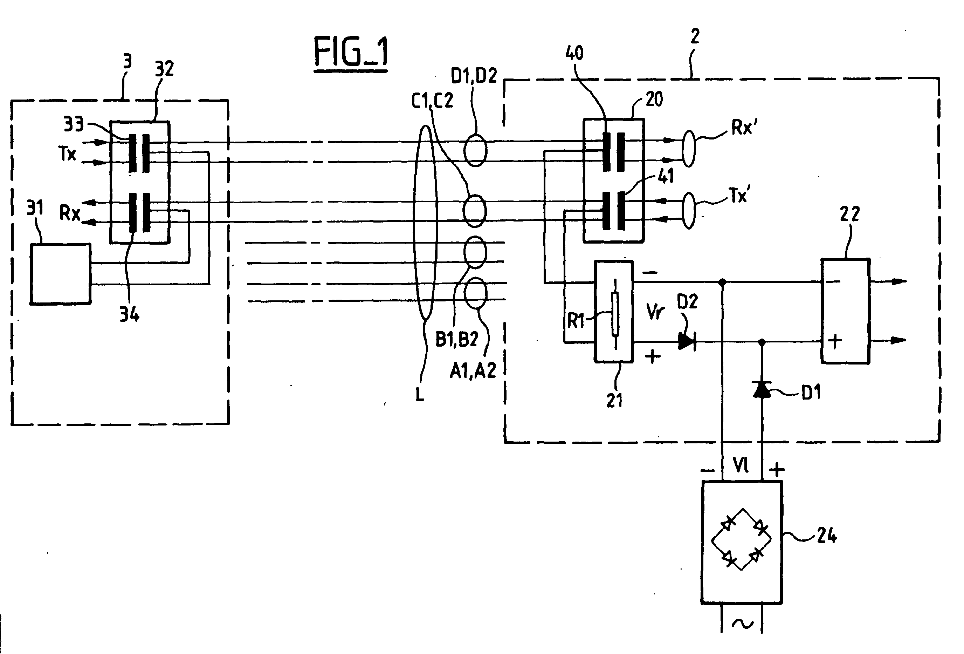

La **figure 1** représente notamment le schéma synoptique d'un exemple de réalisation de dispositif de téléalimentation situé dans un répéteur 3, et d'un exemple de réalisation de terminal, selon l'Art Antérieur, ce terminal 2 étant alimenté localement et étant secouru par une téléalimentation via un circuit fantôme utilisant les modes communs sur deux paires d'émission/réception de données. La liaison L comporte quatre paires :
- A1, A2 non utilisée,
- B1, B2 non utilisée,
- C1, C2 utilisée pour la transmission de données vers le réseau, en mode différentiel,
- D1, D2 utilisée pour la transmission de données vers le terminal, en mode différentiel.

Les paires C1, C2 et D1, D2 sont utilisées en outre en mode commun pour téléalimenter le terminal 2 par un circuit fantôme.

Le répéteur 3, comporte une unité 31 de téléalimentation et de détection de présence de terminal téléalimentable, et un combineur 32. Le combineur 32 comprend deux transformateurs 33 et 34 transmettant respectivement un signal Tx à émettre vers un terminal, et un signal Rx reçu d'un terminal. Ils comportent chacun un premier enroulement et un second enroulement. Les premiers enroulements sont reliés respectivement aux paires D1, D2 et C1, C2. Ils ont chacun un point milieu relié respectivement à une sortie de l'unité 31 de téléalimentation et de détection de présence de terminal téléalimentable. Les seconds enroulements sont reliés à d'autres organes du répéteur 3 qui ne sont pas représentés.

Le terminal 2 comprend un séparateur 20 et un convertisseur continucontinu 22 destiné à abaisser la tension. Le séparateur 20 comprend deux transformateurs 41 et 40 respectivement pour transmettre un signal Tx' à émettre vers le répéteur 3, et transmettre un signal Rx' reçu par le terminal 2. Ils comportent chacun un premier enroulement et un second enroulement. Les premiers enroulements sont reliés respectivement aux paires D1, D2 et C1, C2. Ils ont chacun un point milieu. Ces points milieux fournissent une tension continue Vr de téléalimentation. Dans cet exemple, le point milieu du premier enroulement du transformateur 41 constitue le pôle positif de la téléalimentation. Il est relié par une diode D2 à une entrée positive du convertisseur 22. Le point milieu du second enroulement du transformateur 40 constitue le pôle négatif de la téléalimentation. Il relié directement à une entrée négative du convertisseur 22.

Un module d'identification 21, réalisé selon l'Art Antérieur, est placé en parallèle sur les deux pôles de la téléalimentation. Il permet à l'unité 31 de reconnaître que ce terminal est téléalimentable. Les caractéristiques électriques du module d'identification 21 sont choisies telles qu'il ne court-circuite pas la tension de téléalimentation appliquée au convertisseur 22, et qu'il soit facilement distinguable par rapport aux terminaisons qui sont couramment connectées aux conducteurs disponibles des prises RJ45 des terminaux. Dans le module 21, une résistance R1 est branchée entre les deux pôles de téléalimentation et consomme une intensité égale ou supérieure à la valeur de seuil (20 mA dans cet exemple). La résistance R1 permet au dispositif de téléalimentation 3 de détecter un courant de téléalimentaion afin de détecter une déconnexion éventuelle du terminal 2. Mais elle affecte les caractéristiques électriques du module d'identification 21 et elle rend donc plus compliquée la réalisation de ce module.

L'alimentation locale est une alimentation secteur classique, 24, fournissant une tension continue nominale de 50 volts par exemple, alors que la tension nominale de téléalimentation est de 48 volts. Le pôle positif de cette alimentation secteur 24 est relié à l'entrée positive du convertisseur 22 via une diode D1, l'anode de la diode D1 étant du côté de l'entrée positive. Le pôle négatif de cette alimentation secteur 24 est relié directement à l'entrée négative du convertisseur 22. En fonctionnement normal, la diode D1 est passante alors que la diode D2 est bloquée, à cause de la différence entre les deux tensions d'alimentation. Il n'y aurait pas de courant de télé-alimentation s'il n'avait pas la résistance R1 qui est dans le module 21.

En cas de défaillance du secteur, la tension fournie par l'alimentation secteur 24 s'annule, la diode D2 devient passante, et la diode D1 se bloque. Le convertisseur 22 peut donc continuer à fonctionner grâce à la téléalimentation. La résistance R1 continue à consommer le même courant de téléalimentation.

Il est envisageable de réserver le courant de téléalimentation à des fonction essentielles du terminal, et de ne pas fournir ce courant de téléalimentation à d'autres fonctions non essentielles et grosses consommatrices d'énergie, pendant les coupures du secteur.

Selon une variante de réalisation, au lieu de téléalimenter par un circuit fantôme, il est possible de téléalimenter par :
- les conducteurs A1, A2 seulement ;
- ou B1, B2 seulement ;
- ou via A1, A2, B1, et B2 simultanément ;
- ou via A1, A2, B1, B2, et le circuit fantôme simultanément ;
selon la puissance nécessaire au terminal.

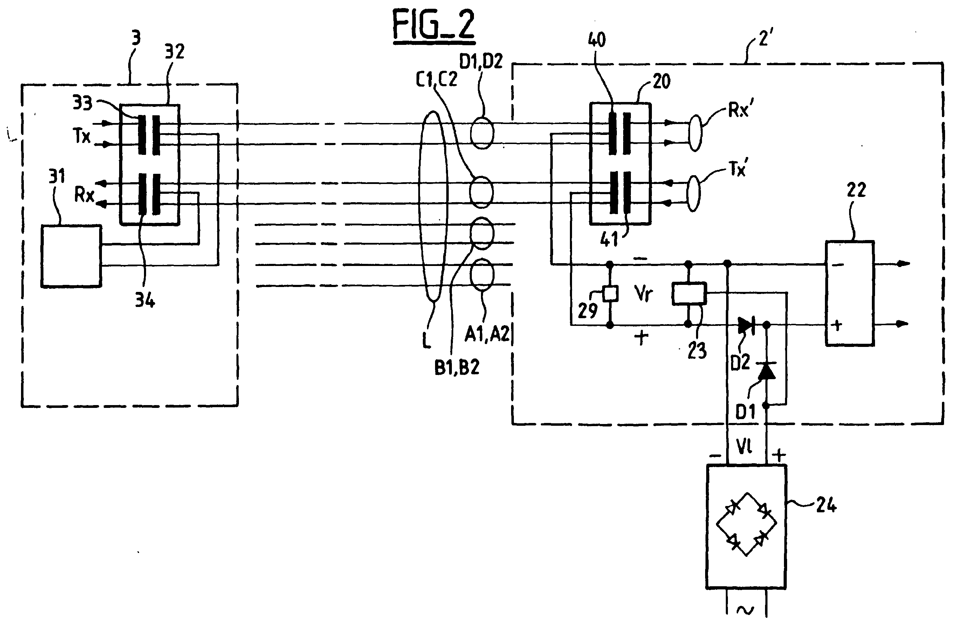

La **figure 2** représente notamment le schéma synoptique d'un exemple de réalisation de terminal téléalimenté 2, selon l'invention, pour une téléalimentation via un circuit fantôme utilisant les modes communs sur deux paires d'émission/réception de données. Les éléments analogues à ceux de la figure 1 portent la même référence. En particulier, le dispositif de téléalimentation 3 est inchangé. Le terminal 2' diffère du terminal 2 par le fait qu'il comporte un module d'identification 29 qui ne consomme pratiquement pas de courant de téléalimentation ; et qu'il comporte en plus un circuit 23 pour consommer un courant de téléalimentation prédéterminé (au moins 20 mA dans cet exemple), activé lorsque l'alimentation locale 24 fonctionne ; et inhibé dans le cas contraire, et dans le cas où la téléalimentation n'est pas appliquée.

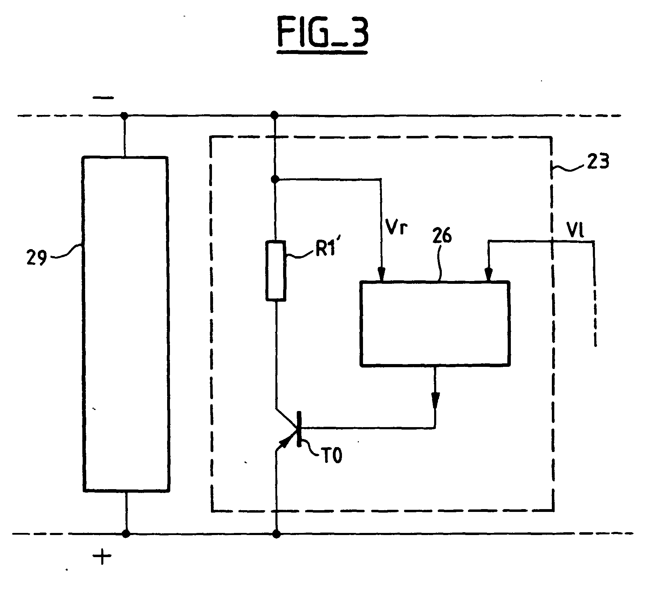

La **figure 3** représente le schéma synoptique de ce circuit 23. Dans cet exemple de réalisation, il comporte :
- Trois bornes, une première et une deuxième borne étant reliées respectivement au pôle négatif et au pôle positif de la téléalimentation, et la troisième borne étant reliée au pôle positif de l'alimentation secteur 24.
- Une résistance R1' dont une première borne est reliée à la borne négative du circuit 23.
- Un transistor bipolaire de type PNP, T0, utilisé comme commutateur, son émetteur étant relié à la borne positive du circuit 23, et son collecteur étant relié à la seconde borne de la résistance R1'.
- Un circuit de commande 26 ayant : un entrée reliée à la borne négative du circuit 23, une entrée reliée à la troisième borne du circuit 23, et une sortie fournissant un signal binaire à la base du transistor T0.

Le circuit de commande 26 compare la tension de téléalimentation Vr à une valeur de seuil égale à 30 volts par exemple, pour détecter que la téléalimention est appliquée ; et il compare la tension de téléalimentation Vr à la tension VI de l'alimentation locale 24. Si la téléalimentation n'est pas appliquée, non seulement il est inutile de brancher une résistance supplémentaire R1' en dérivation sur les deux pôles de la téléalimentation, mais cela affecterait la réalisation du module d'identification 29. Dans ce cas, le circuit 26 le bloque le transistor T0. Le dispositif de téléalimentation 31 ne voit alors que le module d'identification 29.

Si la téléalimentation est appliquée et si l'alimentation locale 24 fonctionne normalement, la tension de téléalimentation Vr étant inférieure à la tension VI de l'alimentation locale 24, le circuit de commande 26 sature le transistor T0. La résistance R1' est alors branchée entre les deux pôle de la téléalimentation. Le courant consommé sur la téléalimentation a une intensité qui est fixée par la résistance R1' seulement, puisque la diode D2 est bloquée. La valeur de la résistance R1' est choisie telle que l'intensité soit au moins égale à la valeur de seuil, 20 mA dans cet exemple.

Si la téléalimentation est appliquée et si l'alimentation locale 24 ne fonctionne plus (à cause d'une coupure de secteur par exemple), le circuit de commande 26 bloque le transistor T0. La consommation de courant de téléalimentation est égale à la consommation du convertisseur 22 (La consommation du module d'identification 21 est négligeable).

Dans d'autres exemples de réalisation décrits ci-dessous, on combine dans un seul circuit le module d'identification 21 et le circuit 23.

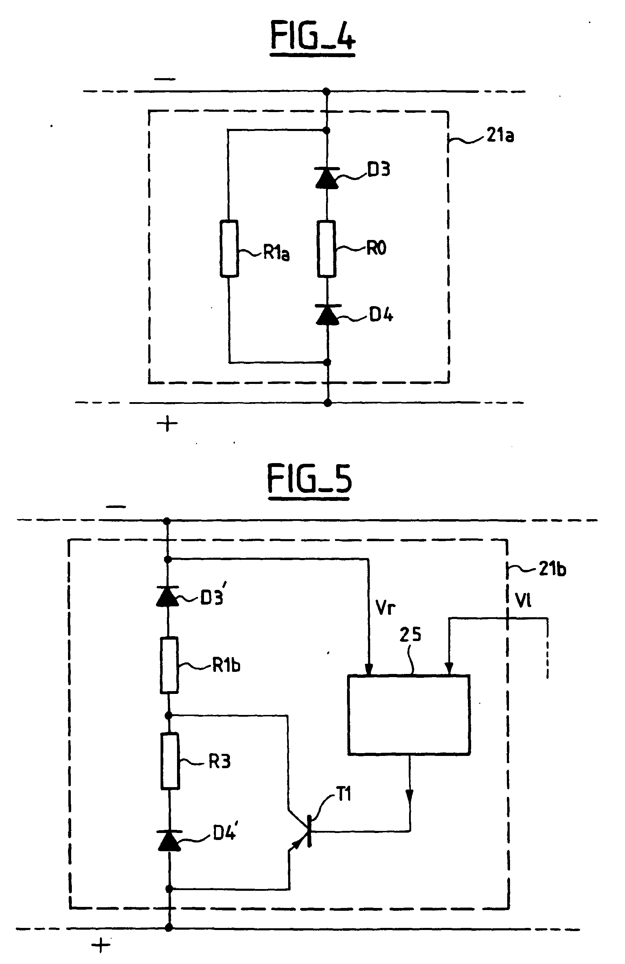

La **figure 4** représente le schéma synoptique plus détaillé d'un premier exemple de réalisation 21a d'un module d'identification 21, selon l'Art Antérieur. Il comporte en série entre la borne négative et la borne positive du module : une diode D3, une résistance R0 de 25 kiloohms, et une diode D4, la résistance R1a étant intercalée entre les diodes D3 et D4. La cathode de la diode D3 est reliée à la borne négative du module, alors que l'anode de la diode D4 est reliée à la borne positive. La valeur de R0 est choisie de façon à pouvoir détecter la présence d'un terminal téléalimentable, avant d'appliquer la tension de téléalimentation.

Les deux diodes sont passantes quand la téléalimentation est appliquée, mais l'intensité du courant consommé est très inférieure à l'intensité de seuil qui permet de détecter la présence d'un terminal téléalimentable. C'est pourquoi, il est prévu en plus une résistance R1a en dérivation entre les pôle positif et le pôle négatif de la téléalimentation. Sa valeur est choisie telle que l'intensité du courant consommé est au moins égale à 20 mA, quand la téléalimentation est appliquée, pour pouvoir détecter une déconnexion après l'application de la téléalimentation.

La **figure 5** représente le schéma synoptique d'un premier exemple de réalisation 21b d'un circuit combinant les fonctions du module 21a et les fonctions du circuit 23. Il comporte :
- Trois bornes, une première et une deuxième borne étant reliées respectivement au pôle négatif et au pôle positif de la téléalimentation, et la troisième borne étant reliée au pôle positif de l'alimentation secteur 24.
- En série entre la borne négative et la borne positive du module 21b : une diode D3', une résistance R1b et une résistance R3, et une diode D4', les résistances R1 b et R3 étant intercalées entre les diodes D3' et D4'.
- Un transistor bipolaire PNP T1 utilisé comme commutateur, son émetteur étant relié à la borne positive du module 21b, et son collecteur étant relié à un point commun aux résistances R1 b et R3.
- Un circuit de commande analogique 25 ayant : un entrée reliée à la borne positive du module 21b, une entrée reliée à la troisième borne du module 21b, et une sortie fournissant un signal binaire commandant la base du transistor T1.

R1 b + R3 = R0 = 25 kiloohms dans cet exemple

Le circuit de commande 25 compare la tension de téléalimentation Vr à une valeur de seuil égale à 30 volts par exemple, pour détecter que la téléalimention est appliquée ; et il compare la tension de téléalimentation Vr à la tension VI de l'alimentation locale 24. Si la téléalimentation n'est pas appliquée, non seulement il est inutile de réduire la résistance en dérivation sur les deux pôles de la téléalimentation, mais cela affecterait la réalisation du module d'identification 21b. Dans ce cas, le circuit 25 le bloque le transistor T1. Le circuit 21 b se comporte alors exactement comme le module d'identification connu 21 a pendant le processus d'identification du terminal.

Si la téléalimentation est appliquée et si l'alimentation locale 24 fonctionne normalement, la tension de téléalimentation Vr étant inférieure à la tension VI de l'alimentation locale 24, le circuit de commande 25 sature le transistor T1. La diode D4' et la résistance R3 sont alors pratiquement court-circuitées par le transistor T1. Le courant consommé a une intensité qui est fixée par la résistance R1 b à une valeur supérieure à la valeur de seuil (La valeur de la résistance R1b est choisie telle que l'intensité de téléalimentation soit au moins égale à 20 mA dans cet exemple).

Quand l'alimentation locale 24 ne fonctionne plus (à cause d'une coupure de secteur par exemple), le circuit de commande 25 bloque le transistor T1. La consommation de courant de téléalimentation est égale à la consommation du convertisseur 22, plus celle fixée par la somme des valeurs des résistances R1b et R3, et qui est négligeable (environ 2 mA).

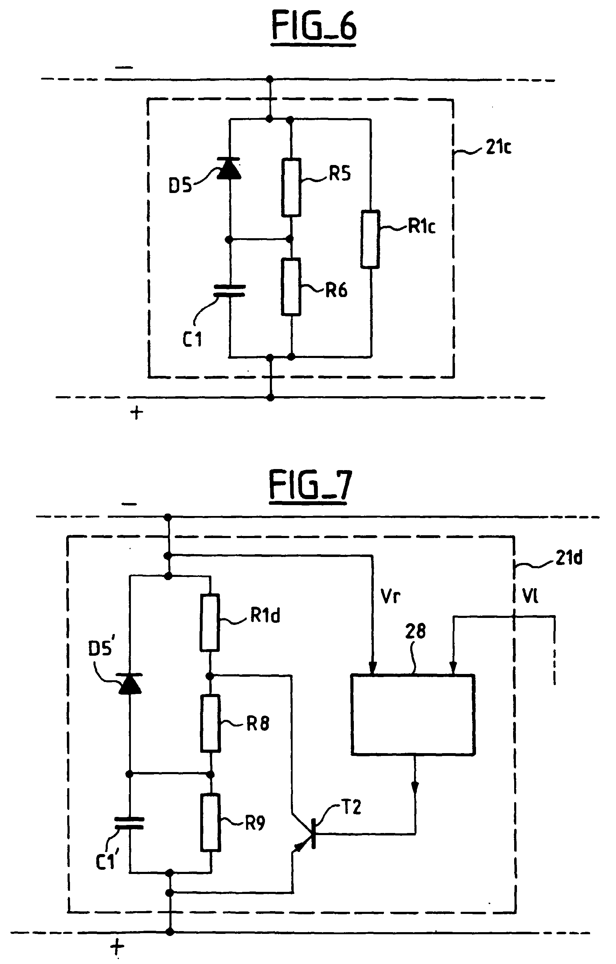

La **figure 6** représente le schéma synoptique détaillé d'un second exemple de réalisation 21c d'un module d'identification 21, selon l'Art Antérieur. Il comporte en série entre la borne négative et la borne positive du module : une diode D5 en parallèle avec une résistance R5 (de 2 kiloohms), d'une part, et une capacité C1 (de 0,3 à 1 microfarad) en parallèle avec une résistance R6 (de 100 kiloohms), d'autre part. La cathode de la diode D5 est reliée à la borne négative du module, alors que une borne la capacité C1 et une borne de la résistance R6 sont reliées à la borne positive. Les valeurs de ces composants sont choisies de façon à pouvoir détecter la présence d'un terminal téléalimentable, par des tests en courant continu et en courant alternatif, avant d'appliquer la tension de téléalimentation.

La diode D5 est passante quand la téléalimentation est appliquée, donc l'intensité consommée est déterminée par la valeur de la résistance R6, tant que la diode D2 est bloquée. Mais l'intensité du courant consommé est très inférieure à l'intensité de seuil (20 mA) qui permet de détecter la présence d'un terminal téléalimentable pendant la téléalimentation. C'est pourquoi, il est prévu en plus une résistance R1c c en dérivation entre les pôle positif et le pôle négatif de la téléalimentation. Sa valeur est choisie telle que l'intensité totale du courant consommé est au moins égale à 20 mA, quand la téléalimentation est appliquée, pour pouvoir détecter une déconnexion après l'application de la téléalimentation.

La **figure 7** représente le schéma synoptique détaillé d'un exemple de réalisation 21d d'un circuit combinant les fonctions du module 21c et les fonctions du circuit 23. Il comporte :
- Trois bornes, une première et une deuxième borne étant reliées respectivement au pôle négatif et au pôle positif de la téléalimentation, et la troisième borne étant reliée au pôle positif de l'alimentation secteur 24.
- En série entre la borne négative et la borne positive du module 21 d : une diode D5', en parallèle avec une résistance R1d et une résistance R8 qui sont en série, d'une part ; et une capacité C1' (analogue à la capacité C1) en parallèle avec une résistance R9 (100 kiloohms), d'autre part.
- Un transistor bipolaire PNP T2 utilisé comme commutateur, son émetteur étant relié à la borne positive du module 21d, et son collecteur étant relié à un point commun aux résistances R1d et R8.
- Un circuit de commande analogique 28 ayant : un entrée reliée à la borne positive du module 21d, une entrée reliée à la troisième borne du module 21d, et une sortie fournissant un signal binaire à la base du transistor T2.

R1 d + R8 = R5 = 2 kiloohms dans cet exemple

Le circuit de commande 28 compare la tension de téléalimentation Vr à une valeur de seuil égale à 30 volts par exemple, pour détecter que la téléalimention est appliquée ; et il compare la tension de téléalimentation Vr à la tension VI de l'alimentation locale 24. Si la téléalimentation n'est pas appliquée, non seulement il est inutile de réduire la résistance en dérivation sur les deux pôles de la téléalimentation, mais cela affecterait la réalisation du module d'identification 21d. Dans ce cas, le circuit 28 le bloque le transistor T2. Le circuit 21d se comporte alors exactement comme le module d'identification connu 21c pendant le processus d'identification du terminal.

Si la téléalimentation est appliquée et si l'alimentation locale 24 fonctionne normalement, la tension de téléalimentation Vr étant inférieure à la tension VI de l'alimentation locale 24, le circuit de commande 28 sature le transistor T2. La résistance R8 et la résistance R9 sont alors pratiquement court-circuitées par le transistor T2. Le courant consommé a une intensité qui est fixée par la résistance R1d à une valeur supérieure à la valeur de seuil (La valeur de la résistance R1d est choisie telle que l'intensité de téléalimentation soit au moins égale à 20 mA dans cet exemple).

Quand l'alimentation locale 24 ne fonctionne plus (à cause d'une coupure de secteur par exemple), le circuit de commande 28 bloque le transistor T2. La consommation de courant de téléalimentation est égale à la consommation du convertisseur 22, plus celle fixée par la somme des valeurs des résistances R1d, R8, R9, et qui est négligeable (environ 0,5 mA).

## Revendications

1. Terminal (2) apte à être alimenté localement et à être téléalimenté par une liaison (L) le reliant à un réseau local, ce terminal comportant une alimentation locale (24) et comportant un module d'identification (21) connecté à au moins deux conducteurs de la liaison, ce module permettant de détecter à distance que ce terminal est apte à être téléalimenté ;
**caractérisé en ce qu'**il comprend en outre (23) :
- des moyens (R1', T0) pour consommer un courant de téléalimentation ayant une intensité prédéterminée ;
- et des moyens de commande (26) comportant des moyens pour activer les moyens pour consommer, lorsque le fonctionnement de l'alimentation locale (24) est normal ; et pour les inhiber dans le cas contraire.

2. Terminal selon la revendication 1, **caractérisé en ce que** les moyens de commande (26) comportent en outre des moyens pour inhiber les moyens pour consommer lorsque la téléalimentation n'est pas appliquée à cette liaison.

3. Terminal selon la revendication 1, **caractérisé en ce que** les moyens (R1', T0) pour consommer un courant de téléalimentation comportent une résistance (R1') couplée en dérivation sur les deux pôles de la téléalimentation par un commutateur (T0) commandable par les moyens de commande (26).

4. Terminal selon la revendication 1, **caractérisé en ce que** les moyens (R1b, T1 ; R1c, T2) pour consommer un courant de téléalimentation comportent une résistance (R1b ; R1c) couplée en dérivation sur les deux pôles de la téléalimentation par un commutateur (T1 ; T2) commandable par les moyens de commande (26) ; et **en ce que** cette résistance constitue une partie d'un module d'identification (21b, 21d) permettant de détecter à distance la présence d'un terminal apte à être téléalimenté.

## Claims

1. Terminal (2) adapted to be powered locally and to receive a remote power feed via a link (L) connecting it to a local area network, said terminal including a local power supply (24) and an identification module (21) connected to at least two conductors of the link, said identification module enabling remote detection that said terminal is adapted to receive a remote power supply **characterised in that** it further includes (23):
- means (R1', T0) for drawing a predetermined remote power feed current, and
- control means (26) including means for activating the current-drawing means when the local power supply (24) is working normally and for inhibiting said current-drawing means when said local power supply is not working normally.

2. Terminal according to claim 1, **characterised in that** the control means (26) further include means for inhibiting the current-drawing means when the remote power feed is not applied to said link.

3. The terminal according to claim 1, **characterised in that** the means (R1', T0) for drawing a remote power feed current include a resistor (R1') shunting the two poles of the remote power feed via a switch (TO) which can be controlled by the control means (26).

4. The terminal according to claim 1, **characterised in that** the means (R1b, T1; R1c, T2) for drawing a remote power feed current include a resistor (R1b; R1c) shunting the two poles of the remote power feed via a switch (T1; T2) which can be controlled by the control means (26) and **in that** said resistor is part of an identification module (21b, 21d) enabling remote detection of the presence of a terminal adapted to receive a remote power feed.

## Patentansprüche

1. Endgerät (2) geeignet für lokale Stromversorgung und für Fernspeisung durch eine Verbindung (L), die es mit einem lokalen Netzwerk verbindet, wobei dieses Endgerät eine lokale Stromversorgung (24) einschließt und ein Identifikationsmodul (21) einschließt, das an mindestens zwei Leiter der Verbindung angeschlossen ist, wobei dieses Modul die Fernerfassung dahingehend ermöglicht, ob dieses Endgerät für die Fernspeisung geeignet ist;
**dadurch gekennzeichnet, dass** es außerdem folgendes einschließt (23):
- Mittel (R1', T0) zum Verbrauchen eines Fernspeisungsstroms mit festgelegter Stärke;
- und Mittel zur Steuerung (26), welche Mittel einschließen, um die Verbrauchsmittel zu aktivieren, wenn die Funktion der lokalen Stromversorgung (24) normal ist; und um diese im gegenteiligen Fall zu hemmen.

2. Endgerät gemäß Anspruch 1, **dadurch gekennzeichnet, dass** die Mittel zur Steuerung (26) außerdem Mittel einschließen, um die Verbrauchsmittel zu hemmen, wenn die Fernspeisung nicht auf diese Verbindung angewandt wird.

3. Endgerät gemäß Anspruch 1, **dadurch gekennzeichnet, dass** die Mittel (R1', T0) zum Verbrauchen eines Fernspeisungsstroms einen Widerstand (R1') enthalten, der an den beiden Polen der Fernspeisung parallel geschaltet ist, und zwar durch einen Schalter (T0), der durch die Mittel zur Steuerung (26) gesteuert werden kann.

4. Endgerät gemäß Anspruch 1, **dadurch gekennzeichnet, dass** die Mittel (R1b, T1; R1c, T2) zum Verbrauchen eines Fernspeisungsstroms einen Widerstand (R1b; R1c) enthalten, der an den beiden Polen der Fernspeisung parallel geschaltet ist, und zwar durch einen Schalter (T1; T2), der durch die Mittel zur Steuerung (26) gesteuert werden kann; und **dadurch gekennzeichnet ist, dass** dieser Widerstand einen Teil eines Identifikationsmoduls (21b, 21d) bildet, der die Fernerfassung eines Endgeräts, das für die Fernspeisung geeignet ist, ermöglicht.
